# EUROPÄISCHE PATENTSCHRIFT

(11) **EP 1 101 787 B1**
(45) Veröffentlichungstag und Bekanntmachung des Hinweises auf die Patenterteilung: **18.08.2004**
(21) Anmeldenummer: 00120641.6
(22) Anmeldetag: 21.09.2000
(51) Int. Cl.: C08G 77/26, C08G 77/24, C09D 183/08

(54) **Triamino- und fluoralkylfunktionelle Organosiloxane**
Organosiloxanes containing trisamino- and fluoroalkyl functional groups
Organosiloxanes contenant des groupes fonctionnels triamino et fluoroalkyle,

(30) Priorität: 15.11.1999 DE 19955047
(43) Veröffentlichungstag der Anmeldung: 23.05.2001
(73) Patentinhaber: Degussa AG, 40474 Düsseldorf (DE)
(72) Erfinder: Standke, Burkhard, Dr., 79540 Lörrach (DE); Monkiewicz, Jaroslaw, Dr., 79618 Rheinfelden (DE); Jenkner, Peter, Dr., 79618 Rheinfelden (DE); Horn, Michael, Dr., 79618 Rheinfelden (DE)

(56) Entgegenhaltungen:
- EP-A- 0 846 717
- EP-A- 0 902 969
- US-A- 5 679 147
- US-A- 5 863 509

## Beschreibung

Die vorliegende Erfindung betrifft neue triamino- und fluoralkylfunktionelle Organosiloxane. Ferner betrifft die vorliegende Erfindung ihre Herstellung, Zusammensetzungen bzw. Mittel, die entsprechende Organosiloxane enthalten, sowie ihre Verwendung.

Insbesondere betrifft die vorliegende Erfindung eine Zusammensetzung, die mindestens ein aminoalkyl- und fluoralkylfunktionelles, hydroxygruppenund/oder alkoxygruppenhaltiges Organosiloxan, Wasser, gegebenenfalls einen Gehalt an Alkohol und gegebenenfalls einen Gehalt an Säure enthält. In der vorliegenden Patentanmeldung sind unter hydroxygruppen- und/oder alkoxygruppenhaltigen Organosiloxanen, welche in wäßrigen Zusammensetzungen enthalten sind, solche Verbindungen zu verstehen, die nach chemischem Verständnis vollständig oder teil-hydrolysiert sind, d. h. im Rahmen der Gleichgewichtseinstellung Hydroxy- bzw. Alkoxygruppen enthalten können.

Es ist lange bekannt, Fluoralkylalkoxysilane oder entsprechende Polykondensate herzustellen und als Hydrophobierungs- sowie Oleophobierungsmittel zu verwenden (beispielsweise DE-PS 834 002, US 3 013 066, GB 935 380, DE-OS 31 00 555, EP 0 382 557 A1, EP 0 493 747 B1, EP 0 587 667 B1 und DE-OS 195 44 763).

Üblicherweise werden Fluoralkylalkoxysilane nicht in konzentrierter Form verwendet, da es sich hierbei um ausgesprochen hochpreisige Produkte handelt. Ferner sind Fluoralkylalkoxysilane in Wasser nicht löslich.

Um hinreichend stabile Lösungen bzw. Zubereitungen fluoralkylfunktioneller Silane sowie entsprechender Cokondensate zu erhalten, hat man organische Lösemittel oder auch Emulgatoren eingesetzt (beispielsweise DE-OS 34 47 636, DE-PS 36 13 384, WO 95/23830, WO 95/23804, WO 96/06895, WO 97/23432, EP 0 846 716 A1).

Ein Nachteil lösemittel- sowie emulgatorhaltiger Zubereitungen sowie von Organosiloxanen mit einem hohen Alkoxygruppenanteil ist der Umstand, daß solche Systeme aus ökologischen und arbeitssicherheitstechnischen Gründen unerwünscht sind. Somit ist man zunehmend bestrebt, wasserbasierende Systeme mit einem möglichst geringen Anteil an flüchtigen, organischen Verbindungen (kurz: "VOC" = "volatile orgaic compounds") bereitzustellen.

Stickstoffhaltige bzw. aminoalkyl- und fluoralkylfunktionelle und im wesentlichen alkoxygruppenfreie Organosiloxane sind als wasserlösliche Bestandteile in ansonsten emulgator- bzw. tensidfreien Mitteln zum Wasser-, Öl- und Schmutzabweisendmachen von Oberflächen bekannt (DE-OS 15 18 551, EP 0 738 771 A1, EP 0 846 717 A1).

Bei den genannten wasserbasierenden Systemen muß stets ein relativ hoher Anteil an Aminoalkylgruppen verwendet werden, um eine gute Wasserlöslichkeit zu gewährleisten. Ein hoher Anteil an Aminoalkylgruppen ist andererseits contraproduktiv, da diese hydrophile Eigenschaften besitzen und somit dem Bestreben entgegenwirken, ein System bereitzustellen, das möglichst hydrophobe Eigenschaften bewirkt.

Der Erfindung lag die Aufgabe zugrunde, weitere wasserlösliche aminoalkylund fluoralkylfunktionelle Organosiloxane bereitzustellen. Ein besonderes Anliegen der vorliegenden Erfindung war es, Organosiloxane bereitzustellen, die eine im Verhältnis zur Anzahl der Aminoalkylgruppen möglichst große Anzahl an Fluoralkylgruppen aufweisen.

Die gestellte Aufgabe wird erfindungsgemäß entsprechend den Angaben der Patentansprüche gelöst.

Es wurde nun überraschenderweise gefunden, daß eine niedrigviskose, d. h. vorzugsweise < 100 mPa s, in der Regel klare bis leicht opalisierende, auch bei Verdünnen mit Wasser in hervorragender Weise über mehrere Monate lagerstabile Zusammensetzung, welche aus mindestens einem wasserlöslichen, triamino- und fluoralkylfunktionellen, hydroxygruppenund/oder alkoxygruppenhaltigen Organosiloxan oder einem Gemisch entsprechender Organosiloxane, Wasser, gegebenenfalls einem Gehalt an Alkohol und gegebenenfalls einem Gehalt an Säure besteht, erhältlich ist, indem man i) mindestens ein Aminoalkylalkoxysilan der allgemeinen Formel IIIa

NH₂(CH₂)₂NH(CH₂)₂NH(CH₂)₃Si(R')ⱼ(OR)₍₃₋ⱼ₎ (IIIa),

worin R und R' gleich oder verschieden sind und eine lineare oder verzweigte Alkylgruppe mit 1 bis 4 C-Atomen darstellen und j gleich 0 oder 1 ist,
und/oder der allgemeinen Formel Illb

[NH₂(CH₂)₂]₂N(CH₂)₃Si(R')ₖ(OR)₍₃₋ₖ₎ (IIIb),

worin R und R' gleich oder verschieden sind und eine lineare oder verzweigte Alkylgruppe mit 1 bis 4 C-Atomen darstellen und k gleich 0 oder 1 ist,
und/oder ein "Bisprodukt" oder ein Gemisch von "Bisprodukten" der allgemeinen Formel IIIc

[NHₓCH₂)ₐNH_{y}(CH₂)_{b}NH_{z}]·[(CH₂)_{c}Si(R')_{d}(OR)_{(3-d)}]ₑ (IIIc),

worin R und R' gleich oder verschieden sind und eine lineare oder verzweigte Alkylgruppe mit 1 bis 4 C-Atomen darstellen, a eine ganze Zahl von 1 bis 6 darstellt, b gleich 1, 2, 3, 4, 5 oder 6 ist, c gleich 1, 2, 3 oder 4 ist, d gleich 0 oder 1 ist, e gleich 1, 2, 3, 4 oder 5 ist, x gleich 0 oder 1 oder 2 ist, y gleich 0 oder 1 ist, z gleich 0 oder 1 oder 2 ist und der Maßgabe (x+y+z) ≤ 4, wobei e für den Fall (x+y+z) = 0 den Zahlenwert 5 annimmt, für (x+y+z) = 1 ist e = 4, für (x+y+z) = 2 ist e = 3, für (x+y+z) = 3 ist e = 2 und für den Fall (x+y+z) = 4 ist e = 1,
und ii) mindestens ein Fluoralkylalkoxysilan der allgemeinen Formel IV

F₃C(CF₂)ᵣ(CH₂)ₛSi(R")ₜ(OR)₍₃₋ₜ₎ (IV),

worin r eine ganze Zahl von 0 bis 18 darstellt, s gleich 0 oder 2 und t gleich 0 oder 1 sind, R und R" gleich oder verschieden sind und eine lineare oder verzweigte Alkyl-Gruppe mit 1 bis 4 C-Atomen darstellen,
mischt, gegebenenfalls Alkohol, Wasser oder ein Wasser/Alkoholgemisch sowie gegebenenfalls einen Katalysator zugibt, reagieren läßt bzw. umsetzt, d. h. gegebenenfalls vorhydrolysiert, hydrolysiert und cokondensiert, den Alkohol vollständig oder teilweise, d. h. geeigneterweise bis auf Restmengen von weniger als 5 Gew.-%, entfernt, und gegebenenfalls das erhaltene Produktgemisch durch Zugabe einer anorganischen oder organischen Säure auf einen pH-Wert < 12 einstellt. Geeigneterweise weist die Zusammensetzung einen pH-Wert < 11 auf.

Darüber hinaus bewirkt die erfindungsgemäße Zusammensetzung ein nochmals verbessertes Abperlverhalten einer entsprechend behandelten, mineralischen Oberfläche - sowohl unter Verwendung hydrophiler als auch hydrophober Standardtestflüssigkeiten (Tests gemäß "Teflon® specification test kir" der Firma Dupont). An dieser Stelle wird auf die Beispiele verwiesen.

Insbesondere kann man durch ein molares Einsatzstoffverhältnis bezüglich eines N-[N'-(2-Aminoethyl)-2-aminoethyl]-3-aminopropyltrialkoxysilans oder eines Aminoalkylalkoxysilans gemäß Formel Illb oder Formel Illc zu einem Fluoralkylalkoxysilan gemäß Formel IV von 1 : ≤ 3,5, vorzugsweise von 1 : 3 bis 1 : 0,5, besonders vorzugsweise von 1 : 3 bis 1 : 1, ganz besonders vorzugsweise von 1 : 3 bis 1 : 2, einen besonders hohen Fluoralkylgruppengehalt in den erfindungsgemäßen wasserlöslichen Cokondensaten erzielen.

Geeigneterweise kann die erfindungsgemäße Zusammensetzung in jedem Verhältnis mit Wasser verdünnt werden. Bei vollständig hydrolysierten Systemen entsteht dabei in der Regel kein zusätzlicher Hydrolysealkohol. Im allgemeinen sind erfindungsgemäße Zusammensetzungen sowie verdünnte Systeme in hervorragender Weise über mehr als 6 Monate lagerstabil.

Gegenstand ist somit eine Zusammensetzung, die mindestens ein hydroxygruppen- und/oder alkoxygruppenhaltiges Organosiloxan und Wasser enthält, die dadurch gekennzeichnet ist, daß das Organosiloxan mindestens eine Triaminogruppe der Formel I

[NHₓ(CH₂)ₐNH_{y}(CH₂)_{b}NH_{z}]- (I),

wobei die Triaminogruppe über mindestens eine weitere N-gebundene Alkylengruppe mit 1 bis 4 C-Atomen an mindestens ein Siliciumatom gebunden ist, a und b gleich oder verschieden sind und eine ganze Zahl von 1 bis 6 darstellen, x gleich 0 oder 1 oder 2 ist, y gleich 0 oder 1 ist, z gleich 0 oder 1 oder 2 ist und der Maßgabe (x+y+z) ≤ 4,
und mindestens eine Si-C-gebundene Fluoralkylgruppe der Formel II

F₃C(CF₂)ᵣ(CH₂)ₛ - (II),

worin r eine ganze Zahl von 0 bis 18 darstellt und s gleich 0 oder 2 ist,
trägt, wobei das molare Verhältnis der Gruppen gemäß den Formeln I und II im Organosiloxan und/oder im Organosiloxangemisch 1 : ≤ 3,5 beträgt.

Gegenstand sind ebenfalls Organosiloxane, die mindestens eine Triaminogruppe der Formel I

[NHₓ(CH₂)ₐNH_{y}(CH₂)_{b}NH_{z}]- (I),

wobei die Triaminogruppe über mindestens eine weitere N-gebundene Alkylengruppe mit 1 bis 4 C-Atomen an mindestens ein Siliciumatom gebunden ist, a und b gleich oder verschieden sind und eine ganze Zahl von 1 bis 6 darstellen, x gleich 0 oder 1 oder 2 ist, y gleich 0 oder 1 ist, z gleich 0 oder 1 oder 2 ist und der Maßgabe (x+y+z) ≤ 4,
und mindestens eine Si-C-gebundene Fluoralkylgruppe der Formel II

F₃C(CF₂)ᵣ(CH₂)ₛ - (II),

worin r eine ganze Zahl von 0 bis 18 darstellt und s gleich 0 oder 2 ist,
enthalten, wobei das molare Verhältnis der Gruppen gemäß den Formeln und II im Organosiloxan und/oder im Organosiloxangemisch 1 : ≤ 3,5 beträgt.

Erfindungsgemäße Organosiloxane basieren im allgemeinen auf sogenannten [M]-, [D]- sowie [T]-Baueinheiten , wie sie dem Fachmann geläufig sind, wobei die oligomeren bzw. polymeren Organosiloxaneinheiten auch Aggregate bilden können.

Solche Organosiloxane tragen üblicherweise neben den erfindungsgemäßen funktionellen Gruppen als weitere Funktionalitäten Hydroxygruppen und/oder Alkoxygruppen. Das Vorliegen von Hydroxy- bzw. Alkoxygruppen kann in der Regel über die bei der Herstellung zugeführte Wassermenge und die Vollständigkeit der Alkoholabtrennung gesteuert werden. Darüber hinaus können die erfindungsgemäßen Organosiloxane als zusätzliche Funktionalitäten auch Alkylgruppen mit 1 bis 16 C-Atomen enthalten, d. h. tragen.

Insbesondere können erfindungsgemäße Organosiloxane in hervorragender Weise mit Wasser verdünnt werden. Dabei erhält man im allgemeinen niedrigviskose, leicht opalisierende Flüssigkeiten. Man kann die erfindungsgemäßen Organosiloxane aber auch in Alkohol lösen oder in wasserlösliche Emulsionen einarbeiten.

Ferner ist Gegenstand ein Verfahren zur Herstellung einer organosiloxanhaltigen Zusammensetzung, das dadurch gekennzeichnet ist, daß man i) mindestens ein Aminoalkylalkoxysilan der allgemeinen Formel llla

NH₂(CH₂)₂NH(CH₂)₂NH(CH₂)₃Si(R')ⱼ(OR)₍₃₋ⱼ₎ (IIIa),

worin R und R' gleich oder verschieden sind und eine lineare oder verzweigte Alkylgruppe mit 1 bis 4 C-Atomen darstellen und j gleich 0 oder 1 ist,
und/oder der allgemeinen Formel IIIb

[NH₂(CH₂)₂]₂N(CH₂)₃Si(R')ₖOR)₍₃₋ₖ₎ (IIIb),

worin R und R' gleich oder verschieden sind und eine lineare oder verzweigte Alkylgruppe mit 1 bis 4 C-Atomen darstellen und k gleich 0 oder 1 ist,
und/oder ein "Bisprodukt" oder ein Gemisch von "Bisprodukten" der allgemeinen Formel IIIc

[NHₓ(CH₂)ₐNH_{y}(CH₂)_{b}NH_{z}]·[(CH₂)_{c}Si(R')_{d}(OR)(_{3-d})]ₑ (IIIc),

worin R und R' gleich oder verschieden sind und eine lineare oder verzweigte Alkylgruppe mit 1 bis 4 C-Atomen darstellen, a eine ganze Zahl von 1 bis 6 darstellt, b gleich 1, 2, 3, 4, 5 oder 6 ist, c gleich 1, 2, 3 oder 4 ist, d gleich 0 oder 1 ist, e gleich 1, 2, 3, 4 oder 5 ist, x gleich 0 oder 1 oder 2 ist, y gleich 0 oder 1 ist, z gleich 0 oder 1 oder 2 ist und der Maßgabe (x+y+z) ≤ 4, wobei e für den Fall (x+y+z) = 0 den Zahlenwert 5 annimmt, für (x+y+z) = 1 ist e = 4, für (x+y+z) = 2 ist e = 3, für (x+y+z) = 3 ist e = 2 und für den Fall (x+y+z) = 4 ist e = 1,
und ii) mindestens ein Fluoralkylalkoxysilan der allgemeinen Formel IV

F₃C(CF₂)₄CH₂)ₛSi(R")ₜ(OR)₍₃₋ₜ₎ (IV),

worin r eine ganze Zahl von 0 bis 18 darstellt, s gleich 0 oder 2 und t gleich 0 oder 1 sind, R und R" gleich oder verschieden sind und eine lineare oder verzweigte Alkyl-Gruppe mit 1 bis 4 C-Atomen darstellen,
mischt, Wasser oder ein Wasser/Alkoholgemisch sowie gegebenenfalls einen Katalysator zugibt, reagieren läßt und den Alkohol vollständig oder teilweise entfernt, wobei man i) mindestens ein Triaminosilan gemäß den allgemeinen Formeln IIIa bis IIIc und ii) mindestens ein Fluoralkylsilan der allgemeinen Formel IV in einem molaren Verhältnis i/ii ≥ 0,29 einsetzt. Vorzugsweise wird das so erhaltene Produktgemisch durch Zugabe einer anorganischen oder organischen Säure auf einen pH-Wert < 12 einstellt. Vorzugsweise stellt man dabei den pH-Wert auf 4 bis 7 ein.

Darüber hinaus ist Gegenstand eine Zusammensetzung, die nach dem erfindungsgemäßen Verfahren erhältlich ist. Ebenso sind Gegenstand erfindungsgemäße triamino- und fluoralkylfunktionelle Organosiloxane, insbesondere deren Gemische, die nach dem erfindungsgemäßen Verfahren erhältlich sind.

Bevorzugt setzt man beim erfindungsgemäßen Verfahren als Komponente i) gemäß Formel IIIa N-[N'-(2-Aminoethyl)-2-aminoethyl)-3-aminopropyltrimethoxysilan (DYNASYLAN® TRIAMO) ein.

Als Beispiel für eine Komponente gemäß Formel Illb kann

(H₂N-CH₂CH₂)₂N-(CH₂)₃Si(OCH₃)₃

angeführt werden.

Unter "Bisprodukten" werden im Sinne der hier vorliegenden Erfindung solche Verbindungen verstanden, wie sie der allgemeinen Formel IIIc zu entnehmen sind, so zum Beispiel

(H₃CO)₃Si(CH₂)₃NH(CH₂)₂NH(CH₂)₂NH(CH₂)₃Si(OCH₃)₃.

Beim erfindungsgemäßen Verfahren kann man aber auch ein Gemisch aus Triaminoalkyl-funktionellen Alkoxysilanen einsetzen.

Als Fluoralkylalkoxysilan der allgemeinen Formel IV setzt man beim erfindungsgemäßen Verfahren vorzugsweise Tridecafluor-1,1,2,2-tetrahydrooctyltrimethoxysilan oder Tridecafluor-1,1,2,2-tetrahydrooctyltriethoxysilan (DYNASYLAN® F8261) ein. Man kann aber auch Gemische mehrerer Fluoralkylalkoxysilane einsetzen.

Vorzugsweise handelt es sich bei den Alkoxysilanen, die hier beim erfindungsgemäßen Verfahren eingesetzt werden, um Methoxy- oder Ethoxysilane. Sofern während des Verfahrens ein Alkohol zugesetzt wird, kann man entsprechend Methanol und/oder Ethanol verwenden.

Als Katalysator eignet sich insbesondere eine Protonensäure oder ein Gemisch aus Protonensäuren. So kann man beim erfindungsgemäßen Verfahren beispielsweise Ameisensäure, Essigsäure sowie Chlorwasserstoff einsetzen. Ferner kann man besagte Säuren auch zur Einstellung des pH-Werts der erfindungsgemäßen Zusammensetzung verwenden.

Beim erfindungsgemäßen Verfahren setzt man i) mindestens ein Triaminosilan gemäß den allgemeinen Formeln llla bis Illc und ii) mindestens ein Fluoralkylsilan der allgemeinen Formel IV in einem molaren Verhältnis i/ii ≥ 0,29, vorzugsweise 0,3 bis 2, besonders vorzugsweise 0,33 bis 0,5, ein.

Ferner stellt man die Konzentration der Organosiloxane in der erfindungsgemäßen wäßrigen Lösung geeigneterweise auf einen Wirkstoffgehalt < 50 Gew.-% ein. Ein Wirkstoffgehalt oberhalb 50 Gew.-% kann zur Gelbildung oder einer starken Trübung führen.

Insbesondere beträgt der Gehalt an Organosiloxan in der erfindungsgemäßen Zusammensetzung 0,005 bis 40 Gew.-%, vorzugsweise 0,01 bis 20 Gew.-%, besonders vorzugsweise 0,05 bis 15 Gew.-%, ganz besonders vorzugsweise 0,1 bis 5 Gew.-%.

Im allgemeinen führt man das erfindungsgemäße Verfahren derart aus, daß man Aminoalkylalkoxysilane der allgemeinen Formeln llla bis Illc und Fluoralkylalkoxysilane der allgemeinen Formel IV mischt, - gegebenenfalls Alkohol zusetzt -, gemeinsam hydrolysiert sowie cokondensiert und den Alkohol einschließlich Hydrolysealkohol destillativ entfernt. Das Mischen der Alkoxysilane kann in einem Temperaturbereich zwischen Fest- und Siedepunkt der eingesetzten Silane erfolgen. In der Regel setzt man zur Durchführung der Hydrolyse dem Silangemisch Wasser im Überschuß zu. Erhalten werden dabei in der Regel hydroxyfunktionelle Organosiloxane. Man kann die Hydrolyse bzw. Cokondensation aber auch mit einer stöchiometrischen oder einer unterstöchiometrischen Menge an Wasser durchführen. Sofern man die bei der Umsetzung zugeführte Wassermenge auf weniger als 3 mol Wasser pro mol eingesetzter Si-Verbindung beschränkt, kann man im wesentlichen alkoxyhaltige, erfindungsgemäße Organosiloxane herstellen. Bei der Umsetzung fallen die erfindungsgemäßen Organosiloxane üblicherweise als Gemisch an.

Im allgemeinen führt man die erfindungsgemäße Umsetzung bei einer Temperatur im Bereich von 0 bis 100 °C durch. Geeigneterweise wird die erfindungsgemäße Umsetzung bei einem pH-Wert von 4 bis 12 durchgeführt. Vorzugsweise erfolgt die Hydrolyse bei einer Temperatur < 100 °C, besonders vorzugsweise bei < 90 °C und ganz besonders vorzugsweise bei < 60 °C. In der Regel sorgt man dabei für eine gute Durchmischung, beispielsweise durch Rühren. Die hier beschriebene Umsetzung kann ferner in Gegenwart eines Katalysators durchgeführt werden.

In der Regel entfernt man beim erfindungsgemäßen Verfahren den Alkohol bzw. Hydrolysealkohol durch Destillation, wobei man die Destillation vorzugsweise bei einer Temperatur < 90 °C, besonders vorzugsweise bei < 60 °C, sowie geeigneterweise - da produktschonend - unter vermindertem Druck durchführt. Geeigneterweise senkt man dabei den Gehalt an Alkohol in der Zusammensetzung auf weniger als 5 Gew.-% ab, vorzugsweise auf weniger als 1 Gew.-%, besonders vorzugsweise auf weniger als 0,5 Gew.-%.

Die Destillation kann vorteilhaft über eine Destillationskolonne vorgenommen und solange fortgeführt werden, bis am Kopf der Kolonne kein Alkohol mehr feststellbar ist, wobei im Sumpf das gewünschte Produkt anfällt und gegebenenfalls weiter aufgearbeitet werden kann. Falls Trübstoffe auftreten sollten, können diese mittels Filtration, Sedimentation, Zentrifugieren oder ähnlichen Standardverfahren aus dem Produkt entfernt werden.

Die Applikation der erfindungsgemäßen Zusammensetzung kann aus einer 50%igen Lösung oder einer verdünnten Lösung erfolgen. Als Verdünnungsmittel kann beispielsweise Wasser verwendet werden. Grundsätzlich kann man die erfindungsgemäße Zusammensetzung aber auch mit einem entsprechenden Alkohol verdünnen.

Gegenstand der vorliegenden Erfindung sind ebenfalls Mittel, die erfindungsgemäße Organosiloxane enthalten, beispielsweise - aber nicht ausschließlich - solche, die zur Hydrophobierung und/oder Oleophobierung von Oberflächen, für "Anti-Graffiti"-Anwendungen, für "Easy to clean"-Anwendungen - um nur einige zu nennen - eingesetzt werden.

Erfindungsgemäße Zusammensetzungen können somit in hervorragender Weise als Mittel zur Hydrophobierung und/oder Oleophobierung von Oberflächen, als Bautenschutzmittel, als Mittel für die Behandlung von Beton, mineralischer Naturstoffe sowie glasierter und unglasierter keramischer Produkte, als Zusatz in Zubereitungen zur Oberflächenbehandlung, für "Anti-Graffiti"-Anwendungen sowie in Mitteln für "Anti-Graffiti"-Anwendungen, für "Easy to clean"-Anwendungen sowie in Mitteln für "Easy to clean"-Anwendungen, als wasserlöslicher Haftvermittler, als Bestandteil in Beschichtungssystemen sowie in Korrosionsschutzmitteln, für die biozide Ausrüstung von Oberflächen, für die Behandlung von Holz, für die Behandlung von Leder, Lederprodukten und Pelzen, für die Behandlung von Glasoberflächen, für die Behandlung von Flachglas, für die Behandlung von Kunststoffoberflächen, für die Herstellung pharmazeutischer und kosmetischer Produkte, für die Modifizierung von Glas- und Mineraloberflächen sowie Glas- und Mineralfaseroberflächen, für die Herstellung von Kunststeinen, für die Abwasserbehandlung, für die Oberflächenmodifizierung und Behandlung von Pigmenten sowie als Bestandteil in Farben und Lacken verwendet werden.

Die vorliegende Erfindung wird durch die folgenden Beispiele näher erläutert.

### Beispiel 1

Herstellung eines wasserlöslichen Kondensats aus DYNASYLAN® TRIAMO und DYNASYLAN® F 8261 im molaren Verhältnis 1 : 3

### Apparatur:

Beheizbarer Rührreaktor mit Destilliervorrichtung, Innenthermometer, Dosiervorrichtung

### Bilanz:

| **Stoffeinsatz** | | |
|---|---|---|
| m(DYNASYLAN® TRIAMO) = | 26,5 g | 0,1 mol |
| m(DYNASYLAN® F 8261) = | 153,0 g | 0,3 mol |
| m(Ethanol) = | 60,0 g | |
| m(Wasser) = | 10,9 g | 1,5 mol/mol Si (Vorhydrolyse) |
| m(Ameisensäure) = | 16,3 g | 0,3 mol (Biesterfeld, 85 %) |
| m(Wasser) = | 860,0 g | |

| **Auswaage** | |
|---|---|
| m(Destillat) = | 113,0 g |
| m(Produkt) = | 1 020,0 g |

### Durchführung:

26,5 g TRIAMO, 153,0 g F 8261 und 60 g Ethanol werden vorgelegt und 2 Stunden lang bei Rückfluß (ca. 80°C) gerührt. Anschließend wird bei ca. 50 °C das Wasser für die Vorhydrolyse zudosiert. Das Reaktionsgemisch wird 8 Stunden bei Rückfluß (ca. 78 °C) hydrolysiert. Danach werden 16,3 g Ameisensäure (85 %) bei ca. 50 °C zudosiert und 860 g Wasser zugegeben. Danach ist das Produkt leicht trüb.

Der entstandene Hydrolysealkohol und die 60 g Ethanol werden unter Vakuum abdestilliert.

| | |
|---|---|
| Druck | 160 - 130 mbar |
| Innentemperatur | 48 - 50 °C |

Die Untersuchung des Produkts mittels 29-Si-NMR-Analyse ergab:

| | |
|---|---|
| 12,9 mol-% Si - | monomeres Silan (triaminofunktionell) und M-Strukturen (triaminofunktionell) |
| 9,2 mol-% Si - | M-Strukturen (fluoralkylfunktionell) und D-Strukturen (triaminofunktionell), |
| 68,1 mol-% Si - | D-Strukturen (fluoralkylfunktionell) und T-Strukturen (triaminofunktionell). |

Ferner wurde eine mittlere Partikelgröße D₅₀ von 0,0374 µm (LaserLichtstreuung) ermittelt.

### Beispiel 2

Das Produkt aus Beispiel 1 wird mit Wasser auf eine Konzentration des ursprünglich eingesetzten Fluoralkyltrialkoxysilans von
a) 1 %,
b) 0,1 %,
c) 0,05 %
verdünnt.

Zum Vergleich wird ein in EP 0 846 716 A2 beschriebenes Cokondensat aus Aminopropyltriethosilan und DYNASYLAN® F 8261 hergestellt, vgl. Beispiel 2 in EP 0 846 716 A2, und mit Wasser auf die gleichen Fluorsilangehalte verdünnt: Lösungen d), e), f).

### Prüfung auf porösem mineralischem Substrat:

In die obengenannten Lösungen werden Kalksandsteinprobekörper mit einer Kantenlänge von ca. 10 cm jeweils 10 Sekunden getaucht. Nach ca. 1 Stunde Trocknung an Luft werden die Prüfkörper vergleichend auf Abperlverhalten gegen Wasser und einem Mineralöl (Kaydol, CAS 8012-95-1) geprüft.

Das Abperlverhalten gegenüber Wasser ist in allen Fällen (a - f) ausgezeichnet. Der Abrollwinkel (= Neigung, die erforderlich ist, um einen Tropfen Wasser definierter Größe zum Abrollen zu bringen - visueller Test: je geringer der Abrollwinkel desto besser ist das Abperlverhalten) ist allerdings bei a), b) und c) deutlich geringer (also besser) als bei den entsprechenden Vergleichslösungen d), e) und f). Besonders deutlich werden die Unterschiede bei Betrachtung der oleophoben Eigenschaften. Ein auf die Oberfläche des Prüfkörpers aufgebrachter Tropfen eines Mineralöls (Kaydol) hinterläßt bei a) und b) nach 30 Sekunden Einwirkzeit keinen Fleck, bei c) wird leichte Fleckenbildung beobachtet, was auf beginnendes Eindringen des Öls in den porösen mineralischen Prüfkörper hindeutet. Im Fall von d) wird bei gleicher Vorgehensweise leichte Fleckenbildung und im Fall von e) und f) starke Fleckenbildung bzw. fast vollständiges Einziehen des Öltropfens beobachtet.

Ergebnis: Die erfindungsgemäßen Formulierungen erzeugen bessere hydround oleophobe Eigenschaften auf porösen, mineralischen Substraten als vergleichbare Produkte nach dem Stand der Technik.

### Prüfung auf Glas:

Objekträger aus Glas (ca. 76 x 26 mm, geputzt gebrauchsfertig, Menzel-Gläser, Artikel-Nr. 01 1101) werden jeweils für 1 Minute in Lösung a) bzw. d) getaucht. Nach Trocknung wird der statische Kontaktwinkel gegen Wasser nach DIN EN 828 bestimmt.

Die mit Lösung a) behandelte Glasplatte zeigt einen Kontaktwinkel von 104°, die mit Lösung d) behandelte Glasplatte zeigt einen Kontaktwinkel von nur 87°. Unbehandelte Glasplatten zeigen einen Kontaktwinkel < 30°.

Das erfindungsgemäße Produkt aus Beispiel 1 weist demnach auch ein besseres Abperlverhalten auf glatten Oberflächen (Glas) gegenüber einem vergleichbaren Produkt nach dem Stand der Technik auf.

### Beispiel 3

Herstellung eines wasserlöslichen Kondensats aus DYNASYLAN® TRIAMO, DYNASYLAN® F 8261 und Hexadecyltrimethoxysilan (DYNASYLAN® 9116) im molaren Verhältnis 1 : 2 : 1

### Apparatur:

Beheizbarer Rührreaktor mit Destilliervorrichtung, Innenthermometer, Dosiervorrichtung

### Bilanz:

| **Stoffeinsatz** | | |
|---|---|---|
| m(DYNASYLAN® TRIAMO) = | 5,3 g | 0,02 mol |
| m(DYNASYIAN® F 8261) = | 20,4 g | 0,04 mol |
| m(DYNASYLAN® 9116) = | 3,5 g | 0,02 mol |
| m(Ethanol) = | 12,0 g | |
| m(Wasser) = | 2,16 g | |
| m(Ameisensäure) = | 3,2 g | (Biesterfeld, 85%) |
| m(Wasser) = | 170,0 g | |

| **Auswaage** | |
|---|---|
| m(Destillat) = | 97,9 g |
| m(Produkt) = | 118,5 g |

### Durchführung:

TRIAMO, F 8261 und Ethanol werden vorgelegt und 2 Stunden lang bei Rückfluß (ca. 80 °C) gerührt. Anschließend wird bei ca. 50 °C das Wasser für die Vorhydrolyse zudosiert. Das Reaktionsgemisch wird ca. 8 Stunden bei Rückfluß (ca. 78 °C) hydrolysiert. Danach wird die Ameisensäure (85 %) bei ca. 50 °C zudosiert und das restliche Wasser zugegeben. Danach ist das Produkt leicht trüb.

Der entstandene Hydrolysealkohol und das zusätzlich zugegebene Ethanol werden unter Vakuum abdestilliert.

| | |
|---|---|
| Druck | 160 - 130 mbar |
| Innentemperatur | 48 - 50 °C |

Das erhaltene Produkt ist leicht trüb und in jedem Verhältnis mit Wasser mischbar.

6,67 g des Produkts werden mit 93,33 g Wasser versetzt und auf eine Kalksandsteinoberfläche aufgetragen. Nach Trocknung kann ausgezeichnetes Abperlverhalten gegen Wasser beobachtet werden.

## Patentansprüche

1. Organosiloxan,
**gekennzeichnet durch**
mindestens eine Triaminogruppe der allgemeinen Formel I
[NHₓ(CH₂)ₐNH_{y}(CH₂)_{b}NH_{z}]- (I),
wobei diese über mindestens eine N-gebundene Alkylengruppe mit 1 bis 4 C-Atomen an mindestens ein Siliciumatom gebunden ist, a und b gleich oder verschieden sind und eine ganze Zahl von 1 bis 6 darstellen, x gleich 0 oder 1 oder 2 ist, y gleich 0 oder 1 ist, z gleich 0 oder 1 oder 2 ist und der Maßgabe (x+y+z) ≤ 4,
und mindestens eine Si-C-gebundene Fluoralkylgruppe der allgemeinen Formel II
F₃C(CF₂)ᵣCH₂)ₛ - (II),
worin r eine ganze Zahl von 0 bis 18 darstellt und s gleich 0 oder 2 ist,
wobei das molare Verhältnis der Gruppen gemäß den Formeln und II im Organosiloxan und/oder im Organosiloxangemisch 1 : ≤ 3,5 beträgt.

2. Zusammensetzung, die mindestens ein hydroxygruppen- und/oder alkoxygruppenhaltiges Organosiloxan und Wasser enthält,
**dadurch gekennzeichnet,**
**daß** das Organosiloxan mindestens eine Triaminogruppe der allgemeinen Formel I
[NHₓ(CH₂)ₐNH_{y}CH₂)_{b}NH_{z}]- (I),
wobei diese über mindestens eine N-gebundene Alkylengruppe mit 1 bis 4 Atomen an mindestens ein Siliciumatom gebunden ist, a und b gleich oder verschieden sind und eine ganze Zahl von 1 bis 6 darstellen, x gleich 0 oder 1 oder 2 ist, y gleich 0 oder 1 ist, z gleich 0 oder 1 oder 2 ist und der Maßgabe (x+y+z) ≤ 4,
und mindestens eine Si-C-gebundene Fluoralkylgruppe der allgemeinen Formel II
F₃C(CF₂)ᵣ(CH₂)ₛ - (II),
worin r eine ganze Zahl von 0 bis 18 darstellt und s gleich 0 oder 2 ist,
trägt, wobei das molare Verhältnis der Gruppen gemäß den Formeln I und II im Organosiloxan und/oder im Organosiloxangemisch 1 : ≤ 3,5 beträgt.

3. Zusammensetzung nach Anspruch 2,
**dadurch gekennzeichnet,**
**daß** der Gehalt an Organosiloxan 0,005 bis 40 Gew.-%, bezogen auf die Zusammensetzung, beträgt.

4. Zusammensetzung nach Anspruch 2 oder 3,
**gekennzeichnet durch**
einen pH-Wert von weniger als 11.

5. Zusammensetzung nach einem der Ansprüche 2 bis4,
**gekennzeichnet durch**
einen Gehalt an Alkohol von weniger als 5 Gew.-%.

6. Verfahren zur Herstellung einer organosiloxanhaltigen Zusammensetzung nach einem der Ansprüche 1 bis5,
**dadurch gekennzeichnet,**
**daß** man
i) mindestens ein Aminoalkylalkoxysilan der allgemeinen Formel IIIa
NH₂(CH₂)₂NH(CH₂)₂NH(CH₂)₃Si(R')ⱼ(OR)₍₃₋ⱼ₎ (IIIa),
worin R und R' gleich oder verschieden sind und eine lineare oder verzweigte Alkylgruppe mit 1 bis 4 C-Atomen darstellen und j gleich 0 oder 1 ist,
und/oder
der allgemeinen Formel IIIb
[NH₂(CH₂)₂]₂N(CH₂)₃Si(R')ₖ(OR)₍₃₋ₖ₎ (IIIb),
worin R und R' gleich oder verschieden sind und eine lineare oder verzweigte Alkylgruppe mit 1 bis 4 C-Atomen darstellen und k gleich 0 oder 1 ist,
und/oder
ein "Bisprodukt" oder ein Gemisch von "Bisprodukten" der allgemeinen Formel IIIc
[NHₓ(CH₂)ₐNH_{y}(CH₂)_{b}NH_{z}]·[(CH₂)_{c}Si(R')_{d}(OR)_{(3-d)}]ₑ (IIIc),
worin R und R' gleich oder verschieden sind und eine lineare oder verzweigte Alkylgruppe mit 1 bis 4 C-Atomen darstellen, a eine ganze Zahl von 1 bis 6 darstellt, b gleich 1, 2, 3, 4, 5 oder 6 ist, c gleich 1, 2, 3 oder 4 ist, d gleich 0 oder 1 ist, e gleich 1, 2, 3, 4 oder 5 ist, x gleich 0 oder 1 oder 2 ist, y gleich 0 oder 1 ist, z gleich 0 oder 1 oder 2 ist und der Maßgabe (x+y+z) ≤ 4, wobei e für den Fall (x+y+z) = 0 den Zahlenwert 5 annimmt, für (x+y+z) = 1 ist e = 4, für (x+y+z) = 2 ist e = 3, für (x+y+z) = 3 ist e = 2 und für den Fall (x+y+z) = 4 ist e = 1,
und
ii) mindestens ein Fluoralkylalkoxysilan der allgemeinen Formel IV
F₃C(CF₂)ᵣ(CH₂)ₛSi(R")ₜ(OR)₍₃₋ₜ₎ (IV),
worin r eine ganze Zahl von 0 bis 18 darstellt, s gleich 0 oder 2 und t gleich 0 oder 1 sind, R und R" gleich oder verschieden sind und eine lineare oder verzweigte Alkyl-Gruppe mit 1 bis 4 C-Atomen darstellen,
mischt, Wasser oder ein Wasser/Alkoholgemisch zugibt, reagieren läßt und den Alkohol vollständig oder teilweise entfernt, wobei man i) mindestens ein Triaminosilan gemäß den allgemeinen Formeln llla bis Illc und ii) mindestens ein Fluoralkylsilan der allgemeinen Formel IV in einem molaren Verhältnis i/ii ≥ 0,29 einsetzt.

7. Verfahren nach Anspruch 6,
**dadurch gekennzeichnet,**
**daß** man neben den Komponenten i) und ii) ein C₁- bis C₁₆-Alkylalkoxysilan einsetzt.

8. Verfahren nach Anspruch 6 oder 7,
**dadurch gekennzeichnet,**
**daß** man dem Gemisch aus Alkoxysilanen vor der Umsetzung Alkohol zusetzt.

9. Verfahren nach einem der Ansprüche 6 bis8,
**dadurch gekennzeichnet,**
**daß** man die Umsetzung bei einer Temperatur < 100 °C durchführt.

10. Verfahren nach einem der Ansprüche 6 bis 9,
**dadurch gekennzeichnet,**
**daß** man die Umsetzung in Gegenwart einer Protonensäure als Katalysator durchführt.

11. Verfahren nach einem der Ansprüche 6 bis 10,
**dadurch gekennzeichnet,**
**daß** man die Umsetzung bei einem pH-Wert von 4 bis 12 durchführt.

12. Verfahren nach einem der Ansprüche 6 bis 11,
**dadurch gekennzeichnet,**
**daß** man den Alkohol aus dem durch Umsetzung erhaltenen Produktgemisch bis auf einen Gehalt von weniger als 5 Gew.-% entfernt.

13. Verfahren nach einem der Ansprüche 6 bis 12,
**dadurch gekennzeichnet,**
**daß** man das Produktgemisch nach dem Entfernen des Alkohols durch Zugabe einer anorganischen oder organischen Säure auf einen pH-Wert < 12 einstellt.

14. Verfahren nach einem der Ansprüche 6 bis 13,
**dadurch gekennzeichnet,**
**daß** man als Katalysator und/oder als Säure zur Einstellung des pH-Werts Chlorwasserstoff, Essigsäure oder Ameisensäure einsetzt.

15. Zusammensetzung erhältlich nach einem der Ansprüche 6 bis 14.

16. Triamino- und fluoralkylfunktionelle Organosiloxane sowie deren Gemische, erhältlich nach einem der Ansprüche 6 bis 15.

17. Mittel, die Organosiloxane nach einem der Ansprüche 1 bis 16 enthalten.

18. Verwendung von triamino- und fluoralkylfunktionellen Organosiloxanen nach einem der Ansprüche 1 bis 17 als Mittel sowie in Mitteln zur Hydrophobierung und/oder Oleophobierung von Oberflächen, als Bautenschutzmittel, als Mittel sowie in Mitteln zur Behandlung von Beton, mineralischer Naturstoffe sowie glasierter oder unglasierter keramischer Produkte, als Zusatz in Zubereitungen zur Oberflächenbehandlung, für Anti-Graffiti"-Anwendungen sowie in Mitteln für "Anti-Graffiti"-Anwendungen, für "Easy to clean"-Anwendungen sowie in Mitteln für "Easy to clean"-Anwendungen, als wasserlöslicher Haftvermittler, als Bestandteil in Beschichtungssystemen sowie in Korrosionsschutzmittel, für die biozide Ausrüstung von Oberflächen, für die Behandlung von Holz, für die Behandlung von Leder, Lederprodukten und Pelzen, für die Behandlung von Glasoberflächen, für die Behandlung von Flachglas, für die Behandlung von Kunststoffoberflächen, für die Herstellung pharmazeutischer und kosmetischer Produkte, für die Modifizierung von Glas- und Mineraloberflächen sowie Glas- und Mineralfaseroberflächen, für die Herstellung von Kunststeinen, für die Abwasserbehandlung, für die Oberflächenmodifizierung und Behandlung von Pigmenten, als Bestandteil in Farben und Lacken.

## Claims

1. An organosiloxane
**characterized by**
at least one triamino group of the general formula I
[NHₓ(CH₂)ₐNH_{y}(CH₂)_{b}NH_{z}] - (I)
where this is bonded to at least one silicon atom via at least one N-bonded alkylene group having 1 to 4 C atoms, a and b are identical or different and are an integer from 1 to 6, x is 0 or 1 or 2, y is 0 or 1, z is 0 or 1 or 2, and with the proviso that (x+y+z) ≤ 4,
and at least one Si-C-bonded fluoroalkyl group of the general formula II
F₃C(CF₂)ᵣ(CH₂)ₛ- (II)
in which r is an integer from 0 to 18 and s is 0 or 2,
wherein the molar ratio of the groups according to the formulae I and II in the organosiloxane and/or in the organosiloxane mixture is 1 : ≤ 3.5.

2. A composition which comprises at least one organosiloxane containing hydroxyl groups and/or alkoxy groups and water,
**characterized in that**
the organosiloxane carries at least one triamino group of the general formula I
[NHₓ(CH₂)ₐNH_{y}(CH₂)_{b}NH_{z}) - (I)
where this is bonded to at least one silicon atom via at least one N-bonded alkylene group having 1 to 4 C atoms, a and b are identical or different and are an integer from 1 to 6, x is 0 or 1 or 2, y is 0 or 1, z is 0 or 1 or 2, and with the proviso that (x+y+z) ≤ 4,
and at least one Si-C-bonded fluoroalkyl group of the general formula II
F₃C(CF₂)ᵣ(CH₂)ₛ- (II)
in which r is an integer from 0 to 18 and s is 0 or 2,
wherein the molar ratio of the groups according to the formulae I and II in the organosiloxane and/or in the organosiloxane mixture is 1 : ≤ 3.5.

3. A composition according to claim 2,
**characterized in that**
the content of organosiloxane is 0.005 to 40% by weight, based on the composition.

4. A composition according to claim 2 or 3,
**characterized by**
a pH of less than 11.

5. A composition according to any one of claims 2 to 4,
**characterized by**
a content of alcohol of less than 5% by weight.

6. A process for the preparation of an organosiloxane-containing composition according to any one of claims 1 to 5,
**characterized in that** it comprises
i) mixing at least one aminoalkylalkoxysilane of the general formula IIIa
NH₂(CH₂)₂NH(CH₂)₂NH(CH₂)₃Si(R')ⱼ(OR)₍₃₋ⱼ₎ (IIIa),
in which R and R' are identical or different and are a linear or branched alkyl group having 1 to 4 C atoms and j is 0 or 1,
and/or of the general formula IIIb
[NH₂(CH₂)₂]₂N(CH₂)₃Si(R')ₖ(OR)₍₃₋ₖ₎ (IIIb)
in which R and R' are identical or different and are a linear or branched alkyl group having I to 4 C atoms and k is 0 or 1,
and/or a "bis-product" or a mixture of "bis-products" of the general formula IIIc
[NHₓ(CH₂)ₐNH_{y}(CH₂)_{b}NH₂]·[(CH₂)_{c}Si(R')_{d}(OR)_{(3-d)}]ₑ (IIIc)
in which R and R' are identical or different and are a linear or branched alkyl group having 1 to 4 C atoms, a is an integer from 1 to 6, b is 1, 2, 3, 4, 5 or 6, c is 1, 2, 3 or 4, d is 0 or 1, e is 1, 2, 3, 4 or 5, x is 0 or 1 or 2, y is 0 or 1, z is 0 or 1 or 2, and with the proviso that (x+y+z) ≤ 4, where e in the case where (x+y+z) = 0 assumes the numerical value 5, for (x+y+z) = 1 e = 4, for (x+y+z) = 2 e = 3, for (x+y+z) = 3 e = 2, and in the case where (x+y+z) = 4 e = 1,
and
ii) at least one fluoroalkylalkoxysilane of the general formula IV
F₃C(CF₂)ᵣ(CH₂)ₛSi(R")ₜ(OR)₍₃₋ₜ₎ (IV)
in which r is an integer from 0 to 18, s is 0 or 2 and t is 0 or 1, and R and R" are identical or different and are a linear or branched alkyl group having 1 to 4 C atoms,
adding water and/or a water/alcohol mixture, allowing the components to react and completely or partly removing the alcohol,
wherein i) at least one triaminosilane according to the general formulae IIIa to IIIc and ii) at least one fluoroalkylsilane of the general formula IV are employed in a molar ratio of i/ii ≥ 0.29.

7. A process according to claim 6,
**characterized in that**
in addition to components i) and ii), a C₁- to C₁₆-alkylalkoxysilane is employed.

8. A process according to claim 6 or 7,
**characterized in that**
alcohol is added to the mixture of alkoxysilanes before the reaction.

9. A process according to any one of claims 6 to 8,
**characterized in that**
the reaction is carried out at a temperature of < 100°C.

10. A process according to any one of claims 6 to 9,
**characterized in that**
the reaction is carried out in the presence of a protonic acid as a catalyst.

11. A process according to any one of claims 6 to 10,
**characterized in that**
the reaction is carried out at a pH of 4 to 12.

12. A process according to any one of claims 6 to 11,
**characterized in that**
the alcohol is removed from the product mixture obtained by the reaction, down to a content of less than 5% by weight.

13. A process according to any one of claims 6 to 12,
**characterized in that**
after removal of the alcohol, the product mixture is brought to a pH of < 12 by addition of an inorganic or organic acid.

14. A process according to any one of claims 6 to 13,
**characterized in that**
hydrogen chloride, acetic acid or formic acid is employed as the catalyst and/or as the acid for establishing the pH.

15. A composition obtainable according to any one of claims 6 to 14.

16. A triamino- or fluoroalkyl-functional organosiloxane and mixtures thereof obtainable according to any one of claims 6 to 14.

17. A composition which comprises an organosiloxane according to any one of claims 1 to 16.

18. The use of a triamino- or fluoroalkyl-functional organosiloxane according to any one of claims 1 to 17 as a composition and in compositions for hydrophobicizing and/or oleophobicizing surfaces, as a building protection composition, as a composition and in compositions for treatment of concrete, naturally occurring mineral substances and glazed or non-glazed ceramic products, as an additive in formulations for surface treatment, for "anti-graffiti" applications and in compositions for "anti-graffiti" applications, for "easy-to-clean" applications and in compositions for "easy-to-clean" applications, as a watersoluble adhesion promoter, as a constituent in coating systems and in anticorrosion compositions, for biocidal treatment of surfaces, for treatment of wood, for treatment of leather, leather products and furs, for treatment of glass surfaces, for treatment of plateglass, for treatment of surfaces of plastics, for the preparation of pharmaceutical and cosmetic products, for modification of glass and mineral surfaces and glass and mineral fibre surfaces, for production of artificial stones, for wastewater treatment, for surface modification and treatment of pigments, and as a constituent in paints and coatings.

## Revendications

1. Organosiloxane,
**caractérisé en ce que**
il comporte au moins un groupe triamino répondant à la formule générale I :
[NHₓ(CH₂)ₐNH_{y}(CH₂)_{b}NH_{z}] - (I),
celui-ci étant lié par l'intermédiaire d'au moins un groupe alkylène lié à N de 1 à 4 atome(s) de carbone à au moins un atome de silicium, a et b sont identiques ou différents et représentent un nombre entier de 1 à 6, x est égal à 0 ou 1 ou 2, y est égal à 0 ou 1, z est égal à 0 ou 1 ou 2, et avec la condition (x+y+z) ≤4,
et au moins un groupe fluoroalkyle lié à Si-C répondant à la formule générale (II)
F₃C(CF₂)ᵣ(CH₂)ₛ - (II)
dans laquelle r représente un nombre entier de 0 à 18 et s est égal à 0 ou 2,
le rapport molaire des groupes selon les formules I et II dans l'organosiloxane et/ou dans le mélange d'organosiloxanes étant égal à 1 / ≤ 3,5.

2. Composition, qui contient au moins un organosiloxane portant des groupes hydroxy et/ou alcoxy et de l'eau,
**caractérisée en ce que**
l'organosiloxane porte au moins un groupe triamino répondant à la formule générale I
[NHₓ(CH₂)ₐNH_{y}(CH₂)_{b}NH_{z}] - (I),
celui-ci étant lié par l'intermédiaire d'au moins un groupe alkylène lié à N de 1 à 4 atome(s) de carbone à au moins un atome de silicium, a et b sont identiques ou différents et représentent un nombre entier de 1 à 6, x est égal à 0 ou 1 ou 2, y est égal à 0 ou 1, z est égal à 0 ou 1 ou 2, et avec la condition (x+y+z) ≤4.
et au moins un groupe fluoroalkyle lié à Si-C, répondant à la formule générale (II)
F₃C(CF₂)ᵣ(CH₂)ₛ- (II),
dans laquelle r représente un nombre entier de 0 à 18 et s a pour valeur 0 ou 2,
le rapport molaire des groupes selon les formules I et II dans l'organosiloxane et/ou dans le mélange d'organosiloxanes étant de 1 / ≤3,5.

3. Composition selon la revendication 2,
**caractérisée en ce que**
la teneur en organosiloxane est de 0,005 à 40 % en poids, rapporté à la composition.

4. Composition selon la revendication 2 ou 3,
**caractérisée en ce que**
elle présente un pH inférieur à 11.

5. Composition selon une quelconque des revendications 2 à 4,
**caractérisée en ce que**
elle comporte une teneur en alcool inférieure à 5 % en poids.

6. Procédé de préparation d'une composition contenant un organosiloxane selon l'une quelconque des revendications 1 à 5,
**caractérisée en ce que**
i) on mélange au moins un aminoalkylalcoxysilane répondant à la formule générale IIIa
NH₂(CH₂)₂NH(CH₂)₂NH(CH₂)₃Si(R')ⱼ(OR)₍₃₋ⱼ₎ (IIIa),
dans laquelle R et R' sont identiques ou différents et représentent un groupe alkyle linéaire ou ramifié de 1 à 4 atome(s) de carbone et j est égal à 0 ou 1,
et / ou répondant à la formule IIIb
[NH₂(CH₂)₂]₂N(CH₂)₃Si(R')ₖ(OR)₍₃₋ₖ₎ (IIIb),
dans laquelle R et R' sont identiques ou différents et représentent un groupe alkyle linéaire ou ramifié de 1 à 4 atome(s) de carbone et k est égal à 0 ou 1,
et/ou
un "produit bis" ou un mélange de "produits bis" répondant à la formule générale IIIc
[NHₓ(CH₂)ₐNH_{y}(CH₂)_{b}NH_{z}]. [(CH₂)_{c}Si(R')_{d}(OR)_{(3-d)}]ₑ (IIIc),
dans laquelle R et R' sont identiques ou différents et représentent un groupe alkyle linéaire ou ramifié de 1 à 4 atomes de carbone, a représente un nombre entier de 1 à 6, b est égal à 1, 2, 3, 4, 5 ou 6, c est égal à 1, 2, 3 ou 4, d est égal à 0 ou 1, e est égal à 1, 2, 3, 4 ou 5, x est égal à 0 ou 1 ou 2, y est égal à 0 ou 1, z est égal à 0 ou 1 ou 2, et avec la condition (x+y+z) ≤4, e prenant, pour le cas (x+y+z) = 0, la valeur numérique 5, pour le cas (x+y+z) = 1 la valeur numérique 4, pour le cas (x+y+z) = 2 la valeur numérique 3, pour le cas (x+y+z) = 3 la valeur numérique 2 et pour le cas (x+y+z) = 4 la valeur numérique 1,
et
ii) au moins un fluoroalkylaleoxysilane répondant à la formule générale (IV)
F₃C(CF₂)ᵣ(CH₂)ₛSi(R")ₜ(OR)₍₃₋ₜ₎ (IV),
dans laquelle r représente un nombre entier de 0 à 18, s'est égal à 0 ou 2 et t est égal à 0 ou 1, R et R" sont identiques ou différents et représentent un groupe alkyle linéaire ou ramifié de 1 à 4 atome(s) de carbone,
on ajoute de l'eau ou un mélange eau - alcool, on fait réagir et on élimine l'alcool entièrement ou partiellement en utilisant i) au moins un triaminosilane selon les formules générales IIIa à IIIc et ii) au moins un fluoroalkylsilane répondant à la formule générale, dans un rapport molaire i/ii ≥ 0,29.

7. Procédé selon la revendication 6,
**caractérisé en ce que**
on utilise, en plus des composants i) et ii) un alkylalcoxysilane en C₁ à C₁₆.

8. Procédé selon la revendication 6 ou 7
**caractérisé en ce que**
on ajoute au mélange d'alcoxysilanes de l'alcool avant la réaction.

9. Procédé selon l'une quelconque des revendications 6 à 8,
**caractérisé en ce que**
on effectue la réaction à une température < 100 °C.

10. Procédé selon une quelconque des revendications 6 à 9,
**caractérise en ce que**
on effectue la réaction en présence d'un acide protonique comme catalyseur.

11. Procédé selon l'une quelconque des revendications 6 à 10,
**caractérisé en ce que**
on effectue la réaction à un pH de 4 à 12.

12. Procédé selon l'une quelconque des revendications 6 à 11,
**caractérisé en ce que**
on élimine l'alcool du mélange de produits obtenu par la réaction jusqu'à une teneur inférieure à 50 % en poids.

13. Procédé selon l'une quelconque des revendications 6 à 12,
**caractérisé en ce que**
on ajuste le mélange de produits après l'élimination de l'alcool par addition d'un acide inorganique ou organique à un pH < 12.

14. Procédé selon l'une quelconque des revendications 6 à 13,
**caractérisé en ce que**
on utilise comme catalyseur et/ou comme acide, pour l'ajustement du pH, l'acide chlorhydrique, l'acide acétique ou l'acide formique.

15. Composition pouvant être obtenue par le procédé selon l'une quelconque des revendications 6 à 14.

16. Organosiloxanes à fonctions triamino- et fluoroalkyle ainsi que leurs mélanges, pouvant être obtenus par le procédé selon l'une quelconque des revendications 6 à 14.

17. Produits qui contiennent les organosiloxanes selon la revendication 16.

18. Utilisation d'organosiloxanes à fonctions triamino- et fluoroalkyle selon la revendication à 17, comme produits ainsi que dans des produits destinés à rendre les surfaces hydrophobes et/ou oléophobes, comme produits de protection des bâtiments, comme produits pour le traitement du béton, des substances naturelles minérales ainsi que des produits céramiques glacés et non glacés, comme additifs dans les préparations pour le traitement des surfaces, pour les applications "anti-graffitis" ainsi que dans les produits pour applications "anti-graffitis", pour les applications " nettoyage facile" ainsi que dans les produits pour les applications "nettoyage facile", comme agents d'adhérence hydrosolubles, comme constituants dans les systèmes de revêtement ainsi que dans les-produits anti-corrosion, pour le traitement biocide des surfaces, pour le traitement du bois, pour le traitement du cuir, des produits à base de cuir et des fourrures, pour le traitement des surfaces de verre, pour le traitement de verre plat, pour le traitement de surfaces en plastique, pour la préparation de produits pharmaceutiques et cosmétiques, pour la modification de surfaces de verre et de surfaces minérales ainsi que de surfaces en fibres de verre et minérales, pour la fabrication des pierres artificielles, pour le traitement des eaux résiduaires, pour la modification de surfaces et le traitement de pigments, comme constituants dans les peintures et vernis.
